# EUROPÄISCHE PATENTSCHRIFT

(11) **EP 2 410 872 B1**
(45) Veröffentlichungstag und Bekanntmachung des Hinweises auf die Patenterteilung: **26.06.2019**
(21) Anmeldenummer: 10718046.5
(22) Anmeldetag: 24.03.2010
(51) Int. Cl.: A23K 40/20, A23K 20/158, A23K 50/40, A23P 30/20, A23K 40/25, A23D 9/04

(54) **VERFAHREN ZUR HERSTELLUNG EINES TIERFUTTERMITTELS**
METHOD FOR PRODUCING ANIMAL FOOD
PROCÉDÉ DE PRODUCTION D'UN ALIMENT POUR ANIMAUX

(30) Priorität: 24.03.2009 DE 102009014137
(43) Veröffentlichungstag der Anmeldung: 01.02.2012
(73) Patentinhaber: Josera GmbH & Co. Kg, 83924 Kleinheubach (DE)
(72) Erfinder: WÖRNER, Martin, 63916 Amoorbach (DE); LEPPER, Markus, 63924 Kleinheubach (DE)
(74) Vertreter: Nitz, Astrid
(86) Internationale Anmeldenummer: PCT/DE2010/000343
(87) Internationale Veröffentlichungsnummer: WO 2010/108483

(56) Entgegenhaltungen:
- WO-A1-96/01057
- WO-A1-2005/018794
- WO-A1-2006/094995
- WO-A1-2008/140736
- WO-A2-01/97637
- WO-A2-02/50311
- DE-C1- 19 838 387
- JP-A- 2003 009 837
- US-A- 3 679 429
- US-A- 5 204 029

## Beschreibung

Die Erfindung betrifft ein Verfahren zur Herstellung eines Nahrungsmittels, nämlich Tierfuttermittel nach dem Oberbegriff von Anspruch 1, und ein Tierfutter gemäß Anspruch 9.

Bekannt ist es, Nahrungsmittel mit Zusatzstoffen zu versehen.

DE 198 38 387 C1 offenbart ein Herstellungsverfahren von Brühwürfeln, wobei eine energieaufwendige, äußere Kühlung bei einem Extrusionsvorgang vorgenommen wird, insbesondere da die Fettkomponente mit stark erhöhter Temperatur eingeführt wird.

JP 2003 009837 zeigt eine Extrusion bei einer Temperatur oberhalb einer Schmelztemperatur oder alternativ in einem kaltem Bereich.

WO 2006/094995 offenbart eine Extrusion einer Fett-in-Wasser Emulsion mit Vakuumkammer bei hohen Temperaturen.

Nachteilig ist dabei auch, dass die teilweise empfindlichen Zusatzstoffe durch Kontakt mit Feuchtigkeit und Luft zerstört werden, sowie eine ungleichmäßige, ungesteuerte Oberflächenbeschaffenheit des Produkts entsteht.

Aufgabe der vorliegenden Erfindung ist es ein gegen Umwelteinflüsse stabiles und sicher und zuverlässig herzustellendes Nahrungsmittel bereitzustellen.

Überraschenderweise zeigte sich als Lösung ein Verfahren zur Herstellung eines Nahrungsmittels, nämlich Tierfuttermittel, mittels Extrusion von Fett, insbesondere Schneckenextrusion, einer Fettmischung mit eingebetteten Zusatzstoffen, insbesondere Nährstoffen, wobei das Fett während der Extrusion lediglich teilweise aufschmilzt, dadurch, dass eine Extrusionstemperatur am R and einer Aufweichtemperatur des Fettes verwendet wird, wobei die Extrusionstemperatur von unten nahe an die Schmelztemperatur des Fettes angenähert wird, wobei als Parameter insbesondere zur Strukturbeeinflussung eingestellt werden: die Temperatur, insbesondere ein Temperaturprofil, insbesondere des Extruders, und/oder die Zylindertemperatur und/oder die Ausgangstemperatur des Fettes und/oder die Temperatur der zugesetzten Zusatzstoffe und/oder eine vorbestimmte Abkühlrate der extrudierten Teilchen nach der Extrusion, und/oder die Schneckenkonfiguration und/oder Schneckendrehgeschwindigkeit und/oder der Materialdruck an der Düsenplatte und/oder der Extruderfüllgrad und/oder die Verweilzeit im Extruder und/oder die Düsengeometrie, insbesondere die Düsenquerschnittsform, insbesondere eine konische Form mit etwa 11,5 mm Durchmesser und etwa 31 mm Länge, und/oder die Düsengröße, insbesondere zwischen etwa 1 bis etwa 20 mm, insbesondere etwa 6 mm, und/oder Zuschläge für die Strukturbildung und/oder die Wärmeleitfähigkeit des Fettes und/oder der Zusatzstoffe, und/oder die Geometrie der extrudierten Teilchen, insbesondere die Größenverteilung einer Teilchenmenge, eingesetzt werden.

Es erfolgt eine thermoplastische Verarbeitung im wesentlichen unterhalb des Schmelzpunktes des Fettes, so dass es nicht zu einem kompletten Aufschmelzen des Fettes kommt. Durch diese schonende Behandlung erhält das Fett eine besondere Struktur, die einen guten Einschluss der Zusatzstoffe ermöglicht und diese zudem gleichmäßig in der Fettmatrix verteilt, sowie eine Einstellung einer vorbestimmten Porosität des Produkts ermöglicht. Die Herstellung ist schnell und hygienisch vorzunehmen. Die eingeschlossenen Zusatzstoffe werden durch die geringen Temperaturen nicht belastet. Es wird eine Kristallstruktur erreicht, die nur geringe Kristallzwischenräume aufweist. Durch die Extrusion wird die Fettstruktur erhalten und im Wesentlichen nicht verändert, beispielsweise durch Temperatureinfluss. Das Herstellungsverfahren ist zuverlässig und reproduzierbar und zugleich wirkungsvoll zur Gewährleistung eines sicheren Produkts. Der in die Fettmatrix eingeschlossene Zusatzstoff ist hierdurch gegen Umwelteinflüsse und beispielsweise auch gegen den Angriff des Pansens bei Wiederkäuern geschützt. Die Fettmatrix und insbesondere auch die Oberflächenbeschaffenheit aufgrund der Extrusion ermöglicht eine langsame, einstellbare, zeitlich verzögerte Auflösung der Nahrungsmittelpartikel und somit eine verzögerte Aufnahme der Zusatzstoffe. Insbesondere kann vorteilhaft eine höhere Freisetzungsrate durch höher Wirkstoffbeladung, höher Produkttemperatur und damit verbundene erhöhte Porosität erreicht werden.

Das derart hergestellte Produkt schützt beispielsweise Selen als Zusatzstoff, insbesondere in Form von Natriumselenit, vor Veränderungen in Form von Verstoffwechselungen in den Vormägen der Wiederkäuer, da in den Vormägen das umgebende extrudierte Fett nach den Experimenten der Anmelderin nicht durchdrungen wird. Im Magen/Darm von Monogastriden wird das derart erzeugte Produkt langsamer verstoffwechseit und die Zusatzstoffe somit langsamer an die Umgebung abgegeben, was eine durch die Herstellungsparameter genau einstellbare Dosierung des Zusatzstoffes ermöglicht, angepasst an eine niedrige Wirk- bzw. Zusatzstoffaufnahme durch die Sättigung der Nährstoffaufnahme pro Zeiteinheit.

Die Erfindung ermöglicht den Einsatz von geschützten Nahrungsmittelkomponenten, insbesondere sowohl als Einzelnahrungsmittel als auch als Nahrungsmittelzugabe als Makro- und Mikronährstoffe, insbesondere auch in der Tierfütterung und damit eine bessere Versorgung der Tiere bei niedrigerer Dosierung im Futter.

Vorteilhaft ist es, wenn die Extrusionstemperatur von unten nahe an die Schmelztemperatur des Fettes angenähert wird. Dann ist einerseits eine gute Verteilung und andererseits eine geringe Belastung der Zusatzstoffe gewährleistet, wobei die Kristallstruktur sicher erhalten bleibt.

Vorteilhaft ist es, wenn als Parameter insbesondere zur Strukturbeeinflussung eingestellt werden: die Temperatur, insbesondere ein Temperaturprofil, insbesondere des Extruders, und/oder die Zylindertemperatur und/oder die Ausgangstemperatur des Fettes und/oder die Temperatur der zugesetzten Zusatzstoffe und/oder eine vorbestimmte Abkühlrate der extrudierten Teilchen nach der Extrusion, und/oder die Schneckenkonfiguration und/oder Schneckendrehgeschwindigkeit und/oder der Materialdruck an der Düsenplatte und/oder der Extruderfüllgrad und/oder die Verweilzeit im Extruder und/oder die Düsengeometrie, insbesondere die Düsenquerschnittsform, insbesondere eine konische Form mit etwa 11,5 mm Durchmesser, die sich auf etwa 6 mm verjüngt, und etwa 31 mm Länge, und/oder die Düsengröße, insbesondere zwischen etwa 1 bis etwa 20 mm, insbesondere etwa 6 mm, und/oder Zuschläge für die Strukturbildung und/oder die Wärmeleitfähigkeit des Fettes und/oder der Zusatzstoffe, und/oder die Geometrie der extrudierten Teilchen, insbesondere die Größenverteitung einer Teilchenmenge, eingesetzt werden.

Vorteilhaft ist somit die Löslichkeit der Produkte über eine bestimmten Zeitraum durch Herstellverfahren zwischen beispielsweise etwa 30 Minuten und etwa 40 Stunden einstellbar. Die Beeinflussung erfolgt vorteilhaft durch Zuschläge zur gezielten Bildung von Kapillaren, wie insbesondere Kieselsäure, die Poren bildet und Stärke, die bei Flüssigkeitskontakt eine Art Sprengeffekt ausübt und das umgebende Material lockert, sowie Cellulosefasern. Die Lipase baut das Fett ab, dann kann die Feuchtigkeit eindringen du eine weitere Aufsprengung des Materials vornehmen.
Weiterhin ist eine gute Einstellbarkeit durch Beeinflussung durch gezielte Abkühlraten gegeben, die eine Ausbildung einer erwünschten Kristallstruktur ermöglichen, wobei bei geringen Kristallzwischenräumen eine langsamere Auflösung erfolgt.
Hierzu können - wie dargestellt - als Parametereinstellung beispielweise auch die die Mischungstemperatur, eine vorbestimmte Abkühlrate, die Verweilzeit eingestellt werden, sowie die mechanische Reibung,
Experimentell ist bei den genannten extrudierten Produkten eine Abhängigkeit der Wirkstofffreisetzung von der Produktgröße erkennbar, ebenfalls durch die genannte Variation der Düsengröße zwischen beispielsweise 1 - 20 mm wird die Wirkstofffreisetzung in einem für die genannten Anwendungen verwendbaren Bereich steuerbar. Auch die Fettrezeptur wird hierzu vorteilhaft verwendet, so dass beispielhaft ein Fettanteil zwischen etwa 30 und etwa 99,5 % verwendet wird.

Vorteilhaft ist es, wenn zur Beschleunigung und/oder Erhöhung der Zusatzstofffreisetzung ein kleinerer Durchmesser der extrudierten Teilchen und/oder eine erhöhte Zusatzstoffkonzentration und/oder eine erhöhte Extrudertemperatur, wobei insbesondere bei temperaturempfindlichen Zusatzstoffen, insbesondere Vitaminen, eine entsprechend angepasste Grenztemperatur, bei Vitaminen eine maximale Temperatur von etwa 70°C, einzustellen ist.

Vorteilhaft ist es, wenn als Zuschläge zur Strukturbildung Zuschläge zur Bildung von Hohlräumen, insbesondere von Kapillaren, und/oder Zuschläge mit einer aufsprengenden Wirkung zugesetzt werden, insbesondere Kieselsäure und/oder Stärke und/oder Cellulose, insbesondere in Form von Cellulosefasern.

Vorteilhaft ist es, wenn eine Nachbehandlung der extrudierten Teilchen vorgenommen wird, insbesondere ein Abschneiden oder eine Temperaturbehandlung, insbesondere eine Abkühlung mit einer vorbestimmten Abkühlrate.

Vorteilhaft ist es, wenn eine niedrigporöse Fett-Matrix erzeugt wird. Durch das vorgeschlagene Verfahren ist es bei geeigneten Parameter, insbesondere Temperaturen auf Basis der genannten Fette möglich, gezielt niedrigporöse Fett-Matrixen mit effizienter Freigabeverzögerung zu erhalten.

Vorteilhaft ist es, wenn bei der Extrusionstemperatur eine Umwandlung von einer α-Modifikation des Fettes in eine β'- und/oder in eine β-Modifikation erfolgt.
Bei experimentell getesteten Fetten wird durch die Extrusion unter geeigneten Extruderparametern eine Umwandlung von der α-Modifikation über die β'- und in die β-Modifikation ermöglicht.

Vorteilhaft ist es, wenn als extrudierte Teilchen streubare Fettteilchen hergestellt werden.

Vorteilhaft ist ein Verfahren zur Herstellung eines Tierfuttermittel umfassend: Fett, wobei erhitztes Fett gesprüht wird und mittels des Sprühens abgekühlt wird, so dass Fettteilchen gebildet werden, wobei zusammen mit dem Fett als Zusatzstoff Selen, insbesondere Natriumselenit und/oder verwendet wird.

Vorteilhaft ist es, wenn die gesprühten Teilchen eine vorbestimmte Teilchengrößenverteilung aufweisen, insbesondere maximal 5 % der Teilchen einen Durchmesser größer als 1,5 mm aufweisen und maximal 5 % einen Durchmesser kleiner als 0,5 mm. Mit dieser Größenverteilung konnten bei Tests insbesondere im Hinblick auf ein Sprüherzeugungsverfahren gute Resultate im Hinblick auf den langsamen und gezielten Abbau der Produkte erreicht werden.

Ebenso vorteilhaft ist die Erzeugung einer vorbestimmten Größenverteilung der Extrusionsprodukte nach der Extrusion insbesondere durch eine eventuelle Nachbehandlung, wobei ein großer Durchmesser eine längere Verweilzeit, und ein kleiner Durchmesser eine kürzere Verweilzeit bewirkt.

Die Aufgabe wird gelöst durch ein Tierfutter herstellbar nach einem Verfahren der Ansprüche 1 bis 7 wobei als Zusatzstoff Selen, insbesondere in Form von Natriumselenit und/oder Natriumselenat, eingesetzt ist, insbesondere für Nutztiere, umfassend gesprühtes Fett und Selen, insbesondere in Form von Natriumselenit und/oder Natriumselenat.

Vorteilhaft ist ein Tierfutter, insbesondere für Nutztiere, umfassend: extrudiertes Fett.

Vorteilhaft ist es, wenn zusammen mit dem Fett zumindest ein Zusatzstoff extrudiert ist, insbesondere ein Nährstoff. Durch die Extrusion des Fettes bildet sich - für Widerkäuer - ein wirksamer Pansenschutz für die im Fett eingeschlossenen Zusatzstoffe, da durch die Extrusion der Mantel geschlossen ist und der Pansensaft nicht durchdringen kann. Erst im späteren Darm erfolgt ein Aufschluss der Teilchen, so dass eine wesentlich geringere Menge an Zusatzstoffen eingesetzt werden kann um denselben Nutzen zu erreichen und die Versorgung der Tiere sicherzustellen.

Die Fettmatrix und insbesondere auch die Oberflächenbeschaffenheit aufgrund der Extrusion ermöglicht eine langsame, einstellbare, zeitlich verzögerte Auflösung der Nahrungsmittelpartikel und somit eine verzögerte Aufnahme der Zusatzstoffe. Vorteilhaft ist es, wenn Zuschläge zur Strukturbildung Zuschläge zur Bildung von Hohlräumen, insbesondere von Kapillaren, und/oder Zuschläge mit einer aufsprengenden Wirkung eingesetzt werden, insbesondere Kieselsäure und/oder Stärke und/oder Cellulose, insbesondere in Form von Cellulosefasern.

Insbesondere hierdurch ist die langsame Umsetzung in vorbestimmter Weise einstellbar.

Vorteilhaft ist es, wenn die extrudierte Teilchen eine Zylinderform haben mit etwa 6 mm Durchmesser und etwa 5 bis etwa 9 mm, insbesondere etwa 7 mm Länge.

Vorteilhaft ist es, wenn als Zusatzstoff Selen, insbesondere in Form von Natriumselenit und/oder Natriumselenat, eingesetzt ist. Ein vorteilhaftes Beispiel ist Natriumselenit mit einem Gewichtsanteil von etwa 0,5 Gew % bis etwa 20 %, insbesondere etwa 2,5 %.

Dabei sind Zusatzstoffe, die insbesondere in Produkten für der Wiederkäuerfütterung eingesetzt werden können insbesondere konjugierte Linolsäure, Harnstoff, Aminosäuren, Glucose, Propandiol und Zusatzstoffe, die insbesondere in erfindungsgemäß hergestellten Produkten für Monogastriden eingesetzt werden insbesondere Benzoesäure, Sorbinsäure, Vitamin C.

Ein vorteilhaft hergestelltes Produkt zur Verwendung im Bereich der Tierfutter ist gegeben, wenn als Nährstoff eine konjugierte Linolsäure und/oder Harnstoff und/oder Benzoesäure und Sorbinsäure, insbesondere bei Monogastriden, und/oder Vitamine, insbesondere Vitamin C, und/oder Lebendhefen und/oder Aminosäuren, insbesondere zur Rinderfütterung und/oder Mineralstoffe und/oder Spurenelemente und/oder Glucose und/oder Propionsäure und/oder Propionate und/oder Propandiol, insbesondere mit Emulgatoren, eingesetzt ist.

Vorteilhaft ist dabei der Harnstoff als Zusatzstoff zur langsamen Freisetzung im Pansen eingebracht. Dies liefert Stickstoff unabhängig von Eiweiß, das heisst eine Grasnahrung ist möglich ohne Konkurrenz zur menschlichen Ernährung durch unnötigen Eiweißverzehr bei Wiederkäuern. Benzoesäure und Sorbinsäure sind als Zusatzstoffe vorteilhaft für die Wirkung im Darmbereich bei Monogastriden eingesetzt und dienen zur Verhinderung von negativen Mikroorganismen im Darm. Vitamin C kann zur Verbesserung der Stabilität zugesetzt werden und wird zugleich, wie auch andere empfindliche Vitamine, durch die Fettmatrix bei der Lagerung und kurz vor dem Einsatz nicht oxidiert.

Lebendhefen werden als Zusatzstoff im Produkt besser lagerbar und eine Feuchtigkeitszufuhr und damit verbundenes Aufblühen wird verhindert.

Ebenso können Aminosäuren eingesetzt werden. Einzelfuttermittel wie Glucose wird gegen den Pansenangriff geschützt, bei Propionsäure, die im Verdauungstrakt gegen Keime eingesetzt wird, verhindert die Fettmatrix geschmackliche Irritationen, Das Propandiol als Zusatzstoff entlastet die Leber. Es ist zwar eine Flüssigkeit und kann aber durch das erfindungsgemäße Verfahren trotzdem gebunden werden, beispielsweise mit Emulgatoren.

Weitere Merkmale und Vorteile der Erfindung ergeben sich aus den Ansprüchen und der nachstehenden Beschreibung, in der Ausführungsbeispiele der Erfindung näher erläutert sind.

Beispiele für Produkte für den Tierfutterbereich sind insbesondere:
Ein Produkt zur Verwendung im Bereich der Tierfutter ist gegeben, wenn die Fettsäurezusammensetzung umfasst: C-14:0 (und/oder C<14) als Tetradecansäure maximal etwa 1,5 Gew.%; C-16:0 als Hexadecansäure mindestens etwa 65 Gew.%, insbesondere etwa 75 Gew.%; C-16:0 als Hexansäure addiert zu C-18:0 als Octadecansäure in Summe mindestens etwa 80 Gew.%, insbesondere etwa 85 Gew%; C-18:1 als Ölsäure etwa 10 Gew.% bis 12 Gew.%; C-18:2 als Linolsäure etwa 2 Gew.% bis 3 Gew.%; C20:0 als Eicosansäure sowie höhere Kettenlängen etwa 0,5 Gew.%. bis maximal etwa 1 %.

Ein Produkt zur Verwendung im Bereich der Tierfutter ist gegeben, wenn bei dem zumindest folgende Komponenten in eine Fettmatrix eingebettet sind, wobei der Prozentanteil berechnet ist in bezug auf Summe der eingesetzten, unverarbeiteten Komponenten einschließlich Verunreinigungen, insbesondere Feuchte etc.: Stärke 10 Gew.% Trägerfüllstoff in Form von Stärke, insbesondere Guarkernmehl, Natriumselenit: 0,5 Gew.% bis 20 Gew.%; insbesondere 2,5 Gew.%, Fettanteil 30 - 99,5 Gew.%, wobei durch Auswahl bestimmter Parameter in der Herstellung, insbesondere der Zuschlagstoffe, die Löslichkeit im Darm zwischen 30 Minuten und 40 Stunden einstellbar ist
Ein derart hergestelltes Produkt weist insbesondere einen Schmelzpunkt zwischen etwa 45 bis etwa 70 ° C, insbesondere etwa 56°C bis etwa 60°C, insbesondere etwa 58°C auf.

Ein Produkt zur Verwendung im Bereich der Tierfutter ist gegeben, wenn zumindest folgende Komponenten in eine Fettmatrix, insbesondere in Form von Fettpulver, insbesondere fraktioniertes Palmfett, mit einem Gewichtsanteil an der Summe der Gesamtkomponenten von etwa 50 Gew.% eingebettet sind: Traubenzucker mit einem Anteil von etwa 42,7 Gew.%, Vitamin E mit etwa 0,17 Gew.%, Cholinchlorid mit etwa 3,0 Gew.%, Nicotinsäure mit etwa 0,98 Gew.%, Vitamin B1 mit etwa 0,009 Gew.%, Vitamin B2 mit etwa 0,0035 Gew. %, Vitamin B6 mit etwa 0,003 Gew.%, Pantothensäure mit etwa 0,012 Gew. %, Folsäure mit etwa 0,0009 Gew.%, Vitamin B12 mit etwa 0,000085 Gew.%, L-Carnithin mit etwa 0,4 Gew.% weitere Vitamine, Kieselsäure mit etwa 2,73 Gew.%.

Die Löslichkeit der Mischung in der Fettmatrix ist im Pansensaft gering, bzw. kann eingestellt werden, durch die Zuschlagstoffe, so dass etwa 30 - 100 % pansenstabil sind. Als Teilchengröße mit einem vorbestimmten Oberflächen zu Volumen Verhältnis werden aktuell Zylinder mit 6 mm Durchmesser und 6 mm Länge vorgeschlagen.

## Patentansprüche

1. Verfahren zur Herstellung eines Nahrungsmittels, nämlich Tierfuttermittel, mittels Extrusion von Fett, insbesondere Schneckenextrusion, einer Fettmischung mit eingebetteten Zusatzstoffen, insbesondere Nährstoffen, wobei das Fett während der Extrusion lediglich teilweise aufschmilzt, dadurch, dass eine Extrusionstemperatur am Rand einer Aufweichtemperatur des Fettes verwendet wird,
wobei die Extrusionstemperatur von unten nahe an die Schmelztemperatur des Fettes angenähert wird,
wobei als Parameter insbesondere zur Strukturbeeinflussung eingestellt werden: die Temperatur, insbesondere ein Temperaturprofil, insbesondere des Extruders, und/oder die Zylindertemperatur und/oder die Ausgangstemperatur des Fettes und/oder die Temperatur der zugesetzten Zusatzstoffe und/oder eine vorbestimmte Abkühlrate der extrudierten Teilchen nach der Extrusion, und/oder die Schneckenkonfiguration und/oder Schneckendrehgeschwindigkeit und/oder der Materialdruck an der Düsenplatte und/oder der Extruderfüllgrad und/oder die Verweilzeit im Extruder und/oder die Düsengeometrie, insbesondere die Düsenquerschnittsform, insbesondere eine konische Form mit etwa 11,5 mm Durchmesser und etwa 31 mm Länge, und/oder die Düsengröße, insbesondere zwischen etwa 1 bis etwa 20 mm, insbesondere etwa 6 mm, und/oder Zuschläge für die Strukturbildung und/oder die Wärmeleitfähigkeit des Fettes und/oder der Zusatzstoffe, und/oder die Geometrie der extrudierten Teilchen, insbesondere die Größenverteilung einer Teilchenmenge, eingesetzt werden,

2. Verfahren nach Anspruch 1, **dadurch gekennzeichnet, dass** zur Beschleunigung und/oder Erhöhung der Zusatzstofffreisetzung ein kleinerer Durchmesser der extrudierten Teilchen und/oder eine erhöhte Zusatzstoffkonzentration und/oder eine erhöhte Extrudertemperatur, wobei insbesondere bei temperaturempfindlichen Zusatzstoffen, insbesondere Vitaminen, eine entsprechend angepasste Grenztemperatur, bei Vitaminen eine maximale Temperatur von etwa 70°C, einzustellen ist.

3. Verfahren nach einem der Ansprüche 1 bis 2, **dadurch gekennzeichnet, dass** als Zuschläge zur Strukturbildung Zuschläge zur Bildung von Hohlräumen, insbesondere von Kapillaren, und/oder Zuschläge mit einer aufsprengenden Wirkung zugesetzt werden, insbesondere Kieselsäure und/oder Stärke und/oder Cellulose, insbesondere in Form von Cellulosefasern.

4. Verfahren nach einem der Ansprüche 1 bis 3 , **dadurch gekennzeichnet, dass** eine Nachbehandlung der extrudierten Teilchen vorgenommen wird, insbesondere ein Abschneiden oder eine Temperaturbehandlung, insbesondere eine Abkühlung mit einer vorbestimmten Abkühlrate.

5. Verfahren nach einem der Ansprüche 1 bis 4 , **dadurch gekennzeichnet, dass** eine niedrigporöse Fett-Matrix erzeugt wird.

6. Verfahren nach einem der Ansprüche 1 bis 5, **dadurch gekennzeichnet, dass** bei der Extrusionstemperatur eine Umwandlung von einer α-Modifikation des Fettes in eine β'- und/oder in eine β-Modifikation erfolgt.

7. Verfahren nach einem der Ansprüche 1 bis 6, **dadurch gekennzeichnet, dass** als extrudierte Teilchen streubare Fettteilchen hergestellt werden, mit insbesondere einer Zylinderform mit etwa 6 mm Durchmesser und etwa 5 bis etwa 9 mm, insbesondere etwa 7 mm Länge.

8. Verfahren nach einem der Ansprüche 1 bis 7, **dadurch gekennzeichnet, dass** einzeln oder als Mischung insbesondere folgende Fette, insbesondere in gehärteter und/oder fraktonierter und/oder umgeesteter Form eingesetzt werden: Rapsöl/Rüböl und/oder Baumwollsaatöl und/oder Palmöl und/oder Palmkernfett und/oder Palmkernöl und/oder Kokosfett und/oder Schweineschmalz und/oder Rindertalg und/oder Fischöl und/oder Weizenkeimöl und/oder Erdnussöl und/oder Sojaöl und/oder Milchfett und/oder Sonnenblumenöl und/oder Knochenöl und/oder Leinöl und/oder Olivenöl und/oder Sesamöl und/oder Maiskeimöl und/oder Rizinusöl und/oder insbesondere die Fettsäurezusammensetzung umfasst: C-14:0 (und/oder C<14) als Tetradecansäure maximal etwa 1,5 Gew.%; C-16:0 als Hexadecansäure mindestens etwa 65 Gew.%, insbesondere etwa 75 Gew.%; C-16:0 als Hexansäure addiert zu C-18:0 als Octadecansäure in Summe mindestens etwa 80 Gew.%, insbesondere etwa 85 Gew%; C-18:1 als Ölsäure etwa 10 Gew.% bis 12 Gew.%; C-18:2 als Linolsäure etwa 2 Gew.% bis 3 Gew.%; C20:0 als Eicosansäure sowie höhere Kettenlängen etwa 0,5 Gew.%. bis maximal etwa 1 %
und/oder
zumindest folgende Komponenten in eine Fettmatrix eingebettet werden, wobei der Prozentanteil berechnet ist in bezug auf Summe der eingesetzten, unverarbeiteten Komponenten einschließlich "Verunreinigungen" (Feuchte etc.): Stärke 10 Gew.% Trägerfüllstoff in Form von Stärke, insbesondere Guarkernmehl, Natriumselenit: 0,5 Gew.% bis 20 Gew.%; insbesondere 2,5 Gew.%, Fettanteil 30 - 99,5 Gew.%, wobei durch Auswahl bestimmter Parameter in der Herstellung, insbesondere der Zuschlagstoffe, die Löslichkeit im Darm zwischen 30 Minuten und 40 Stunden einstellbar ist
und/oder
das Fett einen Schmelzpunkt zwischen etwa 45 bis etwa 70 ° C, insbesondere etwa 56°C bis etwa 60 °C, insbesondere etwa 58°C aufweist
und/oder
als Nährstoff eine konjugierte Linolsäure und/oder Harnstoff und/oder Benzoesäure und Sorbinsäure, insbesondere bei Monogastriden, und/oder Vitamine, insbesondere Vitamin C, und/oder Lebendhefen und/oder Aminosäuren, insbesondere zur Rinderfütterung und/oder Mineralstoffe und/oder Spurenelemente und/oder Glucose und/oder Propionsäure und/oder Propionate und/oder Propandiol, insbesondere mit Emulgatoren, eingesetzt ist,
und/oder
zumindest folgende Komponenten in eine Fettmatrix, insbesondere in Form von Fettpulver, insbesondere fraktioniertes Palmfett, mit einem Gewichtsanteil an der Summe der Gesamtkomponenten von etwa 50 Gew% eingebettet sind: Traubenzucker mit einem Anteil von etwa 42,7 Gew%, Vitamin E mit etwa 0,17 Gew%, Cholinchlorid mit etwa 3,0 Gew%, Nicotinsäure mit etwa 0,98 Gew%, Vitamin B1 mit etwa 0,009 Gew%, Vitamin B2 mit etwa 0,0035 Gew%, Vitamin B9 mit etwa 0,003 Gew%, Pantothensäure mit etwa 0,012 Gew%, Folsäure mit etwa 0,0009 Gew%, Vitamin B12 mit etwa 0,000085 Gew%, L-Carnithin mit etwa 0,4 Gew%, weitere Vitamine, Kieselsäure mit etwa 2,73Gew%.

9. Tierfutter herstellbar nach einem Verfahren der Ansprüche 1 bis 8, **dadurch gekennzeichnet**, das als Zusatzstoff Selen, insbesondere in Form von Natriumselenit und/oder Natriumselenat, eingesetzt ist, insbesondere für Nutztiere, umfassend gesprühtes Fett und Selen, insbesondere in Form von Natriumselenit und/oder Natriumselenat.

## Claims

1. Method for producing a foodstuff, namely animal feed, by extrusion of fat, in particular screw extrusion, of a fat mixture with embedded additives, in particular nutrients, wherein the fat only partially melts during extrusion, in that an extrusion temperature is used at the edge of a softening temperature of the fat, wherein the extrusion temperature is approached from below close to the melting temperature of the fat, wherein parameters in particular for influencing the structure are set: the temperature, in particular a temperature profile, in particular of the extruder, and/or the cylinder temperature and/or the initial temperature of the fat and/or the temperature of the added additives and/or a predetermined cooling rate of the extruded particles after extrusion, and/or the screw configuration and/or screw rotational speed and/or the material pressure at the die plate and/or the extruder filling degree and/or the residence time in the extruder and/or the die geometry, in particular the nozzle cross-sectional shape, in particular a conical shape with a diameter of about 11.5 mm and a length of about 31 mm, and/or the nozzle size, in particular between about 1 and about 20 mm, in particular about 6 mm, and/or additives for the structure formation and/or the thermal conductivity of the grease and/or the additives, and/or the geometry of the extruded particles, in particular the size distribution of a quantity of particles, are used.

2. Method according to claim 1, **characterized in that**, in order to accelerate and/or increase the release of the additive, a smaller diameter of the extruded particles and/or an increased additive concentration and/or an increased extruder temperature are to be set, in particular in the case of temperature-sensitive additives, in particular vitamins, a correspondingly adapted limit temperature, and in the case of vitamins a maximum temperature of about 70°C, is to be set.

3. Process according to one of claims 1 to 2, **characterized in that**, as additives for structure formation, additives for the formation of cavities, in particular of capillaries, and/or additives with a bursting effect are added, in particular silicic acid and/or starch and/or cellulose, in particular in the form of cellulose fibres.

4. Method according to any one of claims 1 to 3, **characterized in that** an aftertreatment of the extruded particles is carried out, in particular a cutting off or a tempering treatment, in particular a cooling at a predetermined cooling rate.

5. Method according to any one of claims 1 to 4, **characterized in that** a low-porous fat matrix is produced.

6. Method according to any one of Claims 1 to 5, **characterized in that** a conversion from an a-modification of the fat to a β';- and/or to a β-modification takes place at the extrusion temperature.

7. Method according to any of Claims 1 to 6, **characterized in that** scatterable fat particles are produced as extruded particles, in particular having a cylindrical shape with a diameter of about 6 mm and a length of about 5 to about 9 mm, in particular about 7 mm.

8. Method according to one of claims 1 to 7, **characterized in that** the following fats in particular are used individually or as a mixture, in particular in hardened and/or fractured and/or converted form: rapeseed oil/rapeseed oil and/or cottonseed oil and/or palm oil and/or palm kernel fat and/or palm kernel oil and/or coconut fat and/or pig fat and/or beef tallow and/or fish oil and/or wheat germ oil and/or peanut oil and/or peanut oil and/or soybean oil and/or milk fat and/or sunflower oil and/or bone oil and/or linseed oil and/or olive oil and/or sesame oil and/or maize germ oil and/or castor oil and/or in particular the fatty acid composition: C-14:0 (and/or C<14) as tetradecanoic acid a maximum of about 1. 5 wt. %; C-16:0 as hexadecanoic acid at least about 65 wt. %, in particular about 75 wt. %; C-16:0 as hexanoic acid added to C-18:0 as octadecanoic acid in total at least about 80 wt. %, in particular about 85 wt. %; C- 18:1 as oleic acid about 10 wt. % to 12 wt. %; C-18:2 as linoleic acid about 2 wt. %; C-16:0 as hexadecanoic acid at least about 2 wt. %, in particular about 75 wt. %; C-16:0 as oleic acid added to C-18:0 as oleic acid in total at least about 80 wt. %, in particular about 85 wt. %; C- 18:1 as oleic acid about 10 wt. % to 12 wt. %; C-18:2 as linoleic acid about 2 wt. %. % to 3 wt. %; C20:0 as eicosanoic acid and higher chain lengths of about 0. 5 wt. % to a maximum of about 1 % and/or at least the following components are embedded in a fat matrix, the percentage being calculated with reference to the sum of the unprocessed components used, including "impurities"; (moisture, etc.): starch 10 wt. % carrier filler in the form of starch, in particular guar gum, sodium selenite: 0. 5 wt. % to 20 wt. %; in particular 2. 5 wt. %, fat content 30 - 99. 5 wt. %, the solubility in the intestine being adjustable between 30 minutes and 40 hours by selecting certain parameters in the production, in particular the additives, and/or the fat having a melting point between about 45 to about 70°C, in particular about 56°C to about 60°C, in particular about 58°C, and/or a conjugated linoleum as nutrient, in particular a conjugated linoleum, in particular about 56°C to about nutrient and/or urea and/or benzoic acid and sorbic acid, in particular for monogastrides, and/or vitamins, in particular vitamin C, and/or live yeasts and/or amino acids, in particular for feeding cattle and/or minerals and/or trace elements and/or glucosides and/or propionic acid and/or propionates and/or propanediol, in particular with emulgatoren, and/or at least the following components are embedded in a fat matrix, in particular in the form of fat powder, in particular fractionated palm fat, with a proportion by weight of the sum of the total components of about 50% by weight: Dextrose with a content of about 42. 7% by weight, vitamin E with about 0. 17% by weight, choline chloride with about 3.0% by weight, nicotinic acid with about 0.98% by weight, vitamin 81 with about 0. 009 w/o, vitamin 82 with about 0. 0035 w/o, Vitamin 89 with about 0. 003 wt%, pantothenic acid with about 0. 012 wt%/o, folic acid with about 0. 0009 wt%, vitamin B12 with about 0. 000085 wt%, L-carnithine with about 0. 4 wt%, other vitamins, silicic acid with about 2. 73 wt%.

9. Animal feed productible according to a process of claims 1 to 8, **characterized in that** selenium, in particular in the form of sodium selenite and/or sodium selenate, is used as an additive, in particular for farm animals, comprising sprayed fat and selenium, in particular in the form of sodium selenite and/or sodium selenate.

## Revendications

1. Procédé de fabrication d'une denrée alimentaire, notamment d'aliments pour animaux, comprenant l'extrusion de graisse, en particulier l'extrusion à vis, d'un mélange de graisse avec des additifs incorporés, en particulier des nutriments, dans lequel la graisse ne fond que partiellement pendant l'extrusion, une température d'extrusion étant utilisée au bord d'une température de ramollissement de la graisse, dans lequel on approche par dessous la température d'extrusion, qui est proche de la température de fusion de la graisse, des paramètres étant fixés, notamment pour influencer la structure : la température, en particulier un profil de température, en particulier de l'extrudeuse, et/ou la température du cylindre et/ou la température initiale de la matière grasse et/ou la température des additifs ajoutés et/ou une vitesse de refroidissement prédéterminée des particules extrudées après extrusion, et/ou la configuration de la vis et/ou la vitesse de rotation de la vis et/ou la pression du matériau sur la plaque filière et/ou le degré de remplissage de l'extrudeuse et/ou la durée de séjour dans l'extrudeuse et/ou la géométrie de la matrice, en particulier la forme de la section transversale de la buse, en particulier une forme conique avec un diamètre d'environ 11,5 mm et une longueur d'environ 31 mm, et/ou la taille de la buse, en particulier entre environ 1 et environ 20 mm, en particulier environ 6 mm, et/ou des additifs pour la formation de structure et/ou la conductivité thermique de la graisse et/ou des additifs, et/ou la géométrie des particules extrudées, en particulier la distribution de la taille de la quantité des particules, sont utilisés,

2. Procédé selon la revendication 1, **caractérisé en ce que**, pour accélérer et/ou augmenter la libération de l'additif, il faut régler un diamètre plus petit des particules extrudées et/ou une concentration accrue d'additif et/ou une température d'extrudeuse plus élevée, en particulier dans le cas d'additifs thermosensibles, en particulier de vitamines, une température limite adaptée en conséquence, dans le cas de vitamines une température maximale de 70°C environ.

3. Procédé selon l'une des revendications 1 à 2, **caractérisé en ce que**, en tant qu'additifs pour la formation de structures, on ajoute des additifs pour la formation de cavités, en particulier de capillaires, et/ou des additifs à effet de rupture, en particulier l'acide silicique et/ou l'amidon et/ou la cellulose, en particulier sous forme de fibres de cellulose.

4. Procédé selon l'une quelconque des revendications 1 à 3, **caractérisé en ce qu'**on effectue un post-traitement des particules extrudées, en particulier un traitement de coupe ou de revenu, en particulier un refroidissement à une vitesse de refroidissement prédéterminée.

5. Procédé selon l'une quelconque des revendications 1 à 4, **caractérisé en ce que** l'on produit une matrice grasse peu poreuse.

6. Procédé selon l'une quelconque des revendications 1 à 5, **caractérisé en ce qu'**à la température d'extrusion, on passe d'une modification a de la graisse à une modification β';- et/ou à une modification β.

7. Procédé selon l'une quelconque des revendications 1 à 6, **caractérisé en ce que** des particules de graisse dispersables sont produites sous forme de particules extrudées, en particulier de forme cylindrique ayant un diamètre d'environ 6 mm et une longueur d'environ 5 à environ 9 mm, en particulier environ 7 mm.

8. Procédé selon l'une des revendications 1 à 7, **caractérisé en ce que** les graisses suivantes en particulier sont utilisées individuellement ou en mélange, en particulier sous forme durcie et/ou fracturée et/ou transformée : Huile de colza/huile de colza et/ou huile de coton et/ou huile de palme et/ou graisse de palmiste et/ou huile de palmiste et/ou graisse de coco et/ou graisse de coco et/ou saindoux et/ou suif de boeuf et/ou huile de poisson et/ou huile de germe de blé et/ou huile d'arachide et/ou huile de soja et/ou lait graisse et/ou huile de tournesol et/ou huile d'os et/ou huile de lin et/ou huile d'olive et/ou huile de sésame et/ou huile de germe de maïs et/ou huile de ricin et/ou en particulier la composition en acides gras : C-14:0 (et/ou C<14) sous forme d'acide tétradécanoïque au maximum d'environ 1,5 % en poids ; C-16:0 sous forme d'acide hexadécanoïque au moins environ 65 % en poids, en particulier environ 75 % en poids ; C-16:0 sous forme d'acide hexanoïque ajouté à C-18:0 en tout, en acide octadécanoïque, en poids, environ 80 % en poids environ en poids au minimum, en particulier environ 85 % en poids ; C- 18:1 sous forme d'acide oléique environ 10 à 12 % en poids, C-18:2 sous forme d'acide linoléique environ 2à 3 % en poids ; C20:0 sous forme d'acide eicosanoïque et des longueurs de chaîne supérieures d'environ 0,5 % en poids à un maximum d'environ 1 % et/ou au moins les composants suivants sont incorporés dans une matrice de graisse, le pourcentage étant calculé par rapport à la somme des composants non traités utilisés, y compris les « impuretés "; (humidité, etc.), en présence d'une matrice grasse.) : amidon 10 % en poids de charge de support sous forme d'amidon, en particulier gomme de guar, sélénite de sodium : 0,5 % en poids à 20 % en poids ; en particulier 2,5 % en poids, teneur en graisse 30 - 99,5 % en poids. dans laquelle la solubilité dans l'intestin peut être réglée entre 30 minutes et 40 heures en sélectionnant certains paramètres dans la production, en particulier les additifs, et/ou la graisse a un point de fusion entre environ 45 et environ 70°C, en particulier environ 56°C à environ 60°C, en particulier environ 58°C, et/ou un acide linoléique conjugué et/ou de l'urée et/ou de l'acide benzoïque et de l'acide sorbique, en particulier pour les monogastrides, et/ou des vitamines, en particulier de la vitamine C, et/ou des levures vivantes et/ou des acides aminés, en particulier pour l'alimentation du bétail et/ou des minéraux et/ou des oligoéléments et/ou des glucosides et/ou de l'acide propionique et/ou des propionates et/ou du propanediol, en particulier avec des émulgates, et/ou au moins les composants suivants sont incorporés dans une matrice de graisse, en particulier sous forme de poudre de graisse, en particulier de graisse de palme fractionnée, avec une proportion en poids de la somme des composants totaux d'environ 50% en poids : Dextrose avec une teneur d'environ 42,7% en poids, vitamine E avec environ 0,17% en poids, chlorure de choline avec environ 3,0% en poids, acide nicotinique avec environ 0,98% en poids, vitamine B1 avec environ 0,009 w/o, vitamine B2 avec environ 0,0035 w/o, Vitamine B9 avec environ 0,003 % en poids, acide pantothénique avec environ 0,012 p/p/o, acide folique avec environ 0,0009 p/p %, vitamine B12 avec environ 0,000085 p/p %, L-carnithine avec environ 0,4 p/p %, autres vitamines, acide silicique avec environ 2,73 p/p %.

9. Aliment pour animaux pouvant être produit selon les revendications 1 à 8, **caractérisé en ce que** du sélénium, en particulier sous forme de sélénite de sodium et/ou de séléniate de sodium, est utilisé comme additif, en particulier pour les animaux de ferme, comprenant de la graisse pulvérisée et du sélénium, en particulier sous forme de sélénite de sodium et/ou de sélénium de sodium.
